# EUROPÄISCHE PATENTANMELDUNG

(11) **EP 1 629 790 A1**
(43) Veröffentlichungstag der Anmeldung: **01.03.2006**
(21) Anmeldenummer: 04405537.4
(22) Anmeldetag: 27.08.2004
(51) Int. Cl.: A61C 7/14

(54) **Kieferorthopädische Apparatur zur Zahnstellungskorrektur sowie ein bei dieser verwendbares Schloss (Bracket)**

(71) Anmelder: Schaulin, Michael, 1588 Cudrefin (CH)
(72) Erfinder: Schaulin, Michael, 1588 Cudrefin (CH)
(74) Vertreter: Roshardt, Werner Alfred

(57) **Zusammenfassung**

Die kieferorthopädische Apparatur zur Zahnstellungskorrektur von Zähnen hat wenigstens einem Bogendraht als Führungselement und wenigstens zwei Schlösser [Brakkets] **(1)**. Jedes Schloss **(1)** hat eine Verbindungseinheit **(7)** für einen Verbund mit dem wenigstens einen Bogendraht und lediglich eine einstückige Basiseinheit **(5)** mit einem Basisboden (**9**). Die Verbindungseinheit **(7)** ist einschnappend in die Basiseinheit **(5)** ausgebildet. Der Basisboden **(9)** ist auf einer Zahnseitenfläche wenigstens einem der Zähne **(3)** bzw. auf wenigstens einem auf einem der Zähne angeordneten Zahnband fixierbar. Jede Verbindungseinheit **(7)** ist klotzartig mit zwei einander gegenüberliegenden Längsseitenwänden **(21a, 21b)** ausgebildet. In jeder Längsseite **(21a, 21b)** ist eine Längsnut **(23a**, **23b)** vorhanden. Jede Basiseinheit **(5)** hat zwei einander gegenüberliegende elastisch aufbiegbare Längsfederwände **(15a**, **15b)**. Das obere freie Wandende **(17a**, **17b)** jeder Längsfederwand **(15a**, **15b)**( ist krallenartig nach innen und gegen den Basisboden **(9)** nach unten für einen einschnappenden Eingriff in die Längsnuten **(23a**, **23b)** der Verbindungseinheit **(7)** gebogen.

Die kieferorthopädische Apparatur zur Zahnstellungskorrektur hat Schlösser, bei denen die Verbindungseinheit auf einfache Art und Weise in eine Basiseinheit einschnappbar und die Haltekraft zwischen Basiseinheit und eingeschnappter Verbindungseinheit sehr gut ist, wobei jedoch eine einfachere Konstruktion erreicht worden ist.

## Beschreibung

### Technisches Gebiet

Die Erfindung betrifft eine kieferorthopädische Apparatur zur Zahnstellungskorrektur gemäss dem Oberbegriff des Patentanspruchs 1 sowie ein Schloss [Bracket] für eine kieferorthopädische Apparatur zur Zahnstellungskorrektur gemäss dem Oberbegriff des Patentanspruchs 2.

### Stand der Technik

Kieferorthopädische Apparaturen mit zweiteiligen Schlössern [Brackets], bestehend aus einer Verbindungseinheit für den Verbund mit einem Bogendraht und lediglich einer einzigen einstückigen, am Zahn bzw. einem Zahnband zu befestigenden Basiseinheit sind als zweiteilige Einheit aus der US 2,908,974, US 3,438,132, der US 4,487,581, der US 2,908,974, der WO 2002/058584 und der EP 1 332 726 bekannt. Eine in die Basiseinheit einschnappend ausgebildete Verbindungseinheit ist aus der US 3,438,132, der US 4,487,581, der US 2,908,974, der WO 2002/058584 und der EP 1 332 726 bekannt.

Aus der US 2,908,974 ist ein zweiteiliges aus Basiseinheit und Verbindungseinheit bestehendes Schloss bekannt. Die Basiseinheit wurde mit ihrem Basisboden am Zahn befestigt. Die Basiseinheit war U-förmig mit nach innen gebogenen Schenkeln ausgebildet. Die Schenkelenden waren hakenförmig nach aussen gebogen. Die Verbindungseinheit hatte zu den Schenkeln der Basiseinheit passende Aussenseiten. Zum Boden hin verbreiterte sich somit der Querschnitt der Verbindungseinheit. In der dem Boden abgewandten Seite der Verbindungseinheit war eine Einlegenut für den Bogendraht ausgebildet. Zur Montage wurde die Verbindungseinheit parallel zu den Seitenflächen der Basiseinheit eingeschoben. Anschliessend wurde der Bogendraht in die Einlegenut eingelegt und mit einer Ligatur, welche um die nach aussen gebogenen, hakenförmigen Schenkelenden griff, fixiert.

Aus der US 3,438,132 ist ein Schloss bekannt, welches aus einer am Zahn zu befestigenden Basiseinheit und einer Verbindungseinheit für den Bogendraht bestand. Die Verbindungseinheit war zur Vermeidung der umständlichen, einschiebenden Montage der US 2,908,974 in die Basiseinheit einschnappbar ausgebildet. Damit ein einschnappendes Zusammensetzen möglich war, war die Basiseinheit U-förmig ausgebildet. In den seitlichen Schenkeln der Basiseinheit war eine halbkreisförmige rillenartige Ausbuchtung eingeprägt. Hierzu passend hatte die als Quader ausgebildete Verbindungseinheit an jeder Innenseitenfäche halbkreisförmige längsverlaufende Ausbeulungen. Im Boden der Verbindungseinheit, welche oberhalb des Bodens der Basiseinheit im montierten Zustand zu liegen kam, war eine Längsfurche ausgebildet, in die der Bogendraht einlegbar war. Die Verbindungseinheit der US 3,438,132 konnte bei einem seitlichen Druck auf den eingelegten Bogendraht oder Zug auf den Bogendraht leicht aus der Basiseinheit herausspringen.

In der WO 2002/058584 ist ebenfalls ein Schloss mit einer in eine Basiseinheit einschnappenden Verbindungseinheit beschrieben. Im Gegensatz zur US 3,438,132 lag hier der Bogendraht, wie auch bei der US 2,908,974, in der Oberseite der Verbindungseinheit. Die Seitenwände der Verbindungseinheit waren hier konvex gewölbt ausgebildet. Die U-förmigen Schenkel der Basiseinheit waren passend zu den Seitenwänden der Verbindungseinheit nach aussen gewölbt ausgebildet. Auch hier waren die Schenkelenden der Basiseinheit nach aussen umgebogen, damit um diese Enden eine Ligatur zur Fixierung des Bogendrahts, der in der als Längsfurche ausgebildeten Einlegenut einlegt war, gezogen werden konnte.

Auch in der EP 1 332 726 ist ein zweiteiliges Schloss bestehend aus Verbindungseinheit und Basiseinheit beschrieben. Die Basiseinheit wurde auch hier direkt am Zahn bzw. am Zahnband befestigt. Die Basiseinheit war jedoch lediglich als Platte ausgebildet. Diese Platte hatte zwei voneinander distanzierte Ausnehmungen. Die Verbindungseinheit war U-förmig ausgebildet, wobei die U-Schenkel geschlitzt waren und an jedem Schenkelende eine Klinkeneinheit vorhanden war. Die Klinkeneinheiten waren in die Ausnehmungen der Basisplatte einklinkbar. In den Schenkeln der Verbindungseinheit waren Durchbrüche angeordnet, durch die wenigstens ein Bogendraht gezogen werden konnte.

Die Verbindungseinheiten und die Basiseinheiten, welche als Schlösser in kieferorthopädischen Apparaturen verwendet werden, sind winzige Teilchen. Die Abmessungen liegen im Millimeterbereich bzw. im Submillimeterbereich.

Die Verbindungseinheit der US 2,908,974 liess sich nur schwer in die Basiseinheit einschieben und sprang zudem des öfteren weg.

Die Verbindungseinheit der US 3,438,132 liess sich zwar einfach und auch mit geringem Kraftaufwand in die Basiseinheit einschnappen. Eine gute Verbindung wurde jedoch erst erreicht, wenn die Ligatur fest montiert war. Analoges galt für das Schloss der WO 2002/058584. Das Schloss der EP 1 332 726 gestattete zwar bereits auch ohne Ligatur eine einwandfreie und sichere, Kraft aufnehmende Verbindung zwischen Basiseinheit und Verbindungseinheit, war jedoch nur aufwendig herstellbar.

### Darstellung der Erfindung

### Aufgabe der Erfindung

Aufgabe der Erfindung ist es, eine kieferorthopädische Apparatur zur Zahnstellungskorrektur mit Schlössern zu schaffen, bei denen die Verbindungseinheit auf einfache Art und Weise in eine Basiseinheit einschnappbar ist und die Haltekraft zwischen Basiseinheit und eingeschnappter Verbindungseinheit gut, d.h. wenigstens so gut wie bei der EP 1 332 726 ist, wobei jedoch gegenüber der EP 1 332 726 eine einfachere Konstruktion gefordert ist.

### Lösung der Aufgabe

Die Aufgabe wird dadurch gelöst, dass die erfindungsgemässe kieferorthopädische Apparatur zur Zahnstellungskorrektur von Zähnen wenigstens einen Bogendraht als Führungselement und wenigstens zwei auf dem Bogendraht sitzende Schlösser [Brackets] hat. Jedes Schloss hat eine Verbindungseinheit für einen Verbund mit dem wenigstens einen Bogendraht und lediglich eine einstückige Basiseinheit mit einem Basisboden. Die Verbindungseinheit ist in die Basiseinheit einschnappend ausgebildet. Der Basisboden ist auf einer Zahnseitenfläche wenigstens einem der Zähne bzw. auf wenigstens einem auf einem der Zähne angeordneten Zahnband fixierbar. Jede Verbindungseinheit ist klotzartig mit zwei einander gegenüberliegenden Längsseitenwänden ausgebildet. In jeder Längsseite ist eine Längsnut vorhanden. Jede Basiseinheit hat zwei einander gegenüberliegende elastisch aufbiegbare Längsfederwände. Das obere freie Wandende der Längsfederwände ist krallenartig nach innen und gegen den Basisboden nach unten für einen einschnappenden Eingriff in die Längsnuten der Verbindungseinheit gebogen.

Die krallenartig nach innen gebogenen Krallenleisten der Basiseinheit gestatten ein leichtes einschnappendes Einschieben der Verbindungseinheit in die Basiseinheit. Die nach innen gebogenen Krallenleisten verhindern jedoch wirkungsvoll ein Herausspringen der Verbindungseinheit auch bei seitlich bzw. drehenden Kräften. Eine in die Basiseinheit **5** eingeschnappte Verbindungseinheit **7** ist jedoch gegen eine Entnahme senkrecht zum Basisboden **9** gut gesichert, da die Krallenleisten aufgebogen werden müssten, was nahezu unmöglich ist. Um die Verbindungseinheit **7** aus der Basiseinheit **5** wieder entnehmen zu können, sind die unten beschriebenen Vorkehrungen getroffen.

Die Basiseinheit ist zudem eine einfach herzustellende Blechkonstruktion. Die Verbindungseinheit lässt sich in einer sogenannten Minitechnik einfach sintern.

Werden die Enden der Krallenleisten nach innen und auch noch gegen den Basisboden nach unten gebogen, so ergibt sich eine weitere verbesserte Fixierung gegen ein Herausspringen der Verbindungseinheit aus der Basiseinheit.

Die Längsseitenwände der Verbindungseinheit sind vorzugsweise gegeneinander geneigt ausgebildet, indem sie nach unten konisch zusammenlaufen. Durch diese Ausgestaltung können beim einschnappenden Einpressen der Verbindungseinheit in eine Basiseinheit die krallenartig gebogenen Längsfederwandenden entlang der Längsseitenwände der Verbindungseinheit bis zum Einschnappen in die Längsnuten gleiten. Die Längsseitenwände könnten auch senkrecht zum Boden der Verbindungseinheit verlaufend ausgebildet werden. Bei einer derartigen Konstruktion müsste den Schenkeln eine nach innen gerichtete Vorspannung gegeben werden.

Die Verbindungseinheit hat wenigstens einen Längsdurchbruch zur Aufnahme des Bogendrahts. Anstelle des Längsdurchbruches könnte auch eine Längsfurche vorgesehen werden. Die Verwendung des Durchbruches gibt jedoch gegenüber der Furche der Verbindungseinheit eine grössere Stabilität und dem Bogendraht einen sicheren Halt.

Die Verbindungseinheit kann vorzugsweise zu einer Mittelebene symmetrisch aufgebaut werden. Von der Symmetrie kann aber auch abgewichen werden und ein Längsseitenansatz angeordnet werden. Den Längsseitenansatz wird man vorzugsweise ebenfalls mit einem Längsdurchbruch versehen, durch den dann ein zweiter Bogendraht gezogen werden kann. Den Längsseitenansatz kann man in seinem Verlauf parallel zur Achse eines ersten Längsdurchbruchs anordnen, der in der Symmetrieebene der keinen Längsseitenansatz aufweisenden Verbindungseinheit liegt. Man kann aber auch beliebige Neigungen des Längsseitenansatzes wählen. Die Konstruktion wird hierdurch nur unbedeutend aufwendiger. Ohne einen bedeutenden konstruktiven Mehraufwand kann ein beliebiger Höhenversatz zum ersten Längsdurchbruch vorgesehen werden. Mit den unterschiedlichen Lagen des Längsseitenansatzes und dessen Längsdurchbruch kann auf besondere Bedürfnisse in der Zahnstellungskorrektur Rücksicht genommen werden.

Wie bereits oben ausgeführt, hat die Verbindungseinheit in der Basiseinheit einen festen Sitz. Um dennoch eine Trennung der beiden Einheiten voneinander zu bewerkstelligen, hat die Verbindungseinheit wenigstens eine quer zu einer der Längsnuten, durch diese hindurch verlaufende Ausnehmung. Die Ausnehmungstiefe liegt im Bereich der Nutentiefe. Vorzugsweise wird man die Tiefe der Ausnehmung etwas tiefer als die Nutentiefe machen. Um die Verbindungseinheit aus der Basiseinheit entnehmen zu können, wird man dann mit einem der Ausnehmungsbreite und -tiefe angepassten, vorzugsweise angespitzten, stabähnlichen Gebilde die in die Basiseinheit eingeschnappte Verbindungseinheit heraushebeln. Die Ausnehmungstiefe muss demzufolge so tief gewählt werden, dass die Spitze des stabähnlichen Gebildes an einer Krallenleiste der Basiseinheit angreifen kann, um diese seitlich aus der Längsnut der Verbindungseinheit über die Nut hinaus heraus hebeln zu können.

Die Verbindungseinheit ist sehr gut mit der Basiseinheit verbunden. Diese Verbindung lässt sich jedoch noch verbessern, indem die Basiseinheit quer zu den Längsfederwänden einen vorderen und einen hinteren Haltewulst hat, welcher die eingeschnappte Verbindungseinheit gegen Verschieben entlang der Längsnut sichert. Der Abstand der Haltewulste entspricht bis auf eine Spieltoleranz der Länge der Verbindungseinheit. Damit die Verbindungseinheit gut jeweils vor diesen Haltewulsten bei der Montage einrutscht, können am Boden der Verbindungseinheit vorstehende Noppen, welche auch als Wulst ausgebildet sein können, verwendet werden. Anstelle der Noppen kann auch ein in eine Ausnehmung im Boden der Verbindungseinheit einschiebbarer Keil verwendet werden. Diesen Keil sollte man dann jedoch möglichst festkleben, festlöten bzw. fest(Laser-)schweissen.

Der Basisboden der Basiseinheit kann eine vordere und eine hintere Auflageansatzfläche zur Auflage auf einer Zahnseitenfläche bzw. auf einem am Zahn angeordneten Zahnband haben. Vorzugsweise erfolgt der Übergang vom Basisboden zur jeweiligen Auflageansatzfläche mit einem erhabenen Haltewulst, wobei der Abstand der Haltewulste bis auf eine Spieltoleranz der Länge der Verbindungseinheit entspricht. Die oben erwähnte Fixierung der Verbindungseinheit mit der Basiseinheit gegen ein Verschieben auf dem Bogendraht kann somit durch eine entsprechende Anformung der Auflageansatzflächen erreicht werden.

An den krallenartigen Wandenden der Basiseinheit können vorstehende Fortsätze angeordnet werden, an denen ein Fixierungsmittel für einen eingelegten Bogendraht anbringbar ist. Diese Fortsätze sind nicht zwingend notwendig. Eine Fixierung des durch den Längsdurchbruch geführten Bogendrahts kann auch mit einer Ligatur vorgenommen werden, die an den Stirnseiten der Verbindungseinheit unterhalb des Bogendrahts und dann über der Oberseite der Verbindungseinheit verläuft.

Die Verbindungseinheit kann auch mit einem Abdeckelement abgedeckt werden. Das Abdeckelement kann eingefärbt werden, um eine Anpassung an die Zahnfarbe zu erreichen. Die kieferorthopädische Apparatur ist dann weniger auffällig. Es kann aber auch eine Abdeckung vorgenommen werden, um eine Ablagerung von Speiseresten zu vermindern. Die Abdeckung kann dadurch erreicht werden, dass jeder Längsrandbereich eines Abdeckelements krallenartig zum einschnappenden Übergreifen der krallenartigen Wandenden der Basiseinheit nach innen gebogen ist. Das Abdeckelement wird dann einschnappend aufgedrückt.

### Kurze Beschreibung der Zeichnungen

Im Folgenden werden Beispiele der erfindungsgemässen kieferorthopädischen Apparatur sowie der hierin verwendeten Schlösser [Brackets] anhand der nachfolgenden Zeichnungen näher erläutert. Weitere Vorteile der Erfindung ergeben sich aus dem Beschreibungstext. Es zeigen:
- Fig. 1: eine perspektivische Ansicht eines Schlosses mit in eine Basiseinheit eingeschnappter Verbindungseinheit,
- Fig. 2: eine perspektivische Darstellung einer Basiseinheit und einer Verbindungseinheit des in Figur 1 dargestellten Schlosses, wobei hier die Verbindungseinheit gegenüber ihrer Lage in **Figur 1** um 180° gedreht ist,
- Fig. 3: eine Variante zu der in den **Figuren 1 und 2** dargestellten Basiseinheit,
- Fig. 4: eine perspektivische Darstellung des in **Figur 1** dargestellten Schlosses mit einer vereinfachten Darstellung der Verbindungseinheit zur Erklärung der Trennung von Basiseinheit und Verbindungseinheit,
- Fig. 5: einen Querschnitt entlang der Linie V - V durch das in **Figur 4** dargestellte Schloss,
- Fig. 6: eine stirnseitige Ansicht einer Variante eines Schlosses mit einem noch abgehobenem Abdeckelement,
- Fig. 7: eine stirnseitige Ansicht des in **Figur 6** dargestellten Schlosses mit aufgeschnapptem Abdeckelement,
- Fig. 8: eine Ausführungsvariante zu dem in den **Figuren 1** bis **7** dargestellten Schloss, wobei die **Figur 8a** eine perspektivische Ansicht, **Figur 8b** eine Draufsicht und **Figur 8c** eine stirnseitige Ansicht ist,
- Fig. 9: eine Variante eines Schlosses, wobei die Verbindungseinheit beispielsweise analog zu der in den **Figuren 6** und **7** dargestellten ausgebildet und lediglich die Basiseinheit variiert ist,
- Fig. 10: eine Stirnansicht einer Verbindungseinheit **50** mit in deren Längsdurchbrüche und deren Längsnut im Herstellungsverfahren einlegbaren Kernen,
- Fig. 11: eine Draufsicht auf eine kieferorthopädische Apparatur mit unterschiedlich ausgebildeten Schlössern, wobei zur besseren Übersicht die Bogendrähte nicht eingezeichnet sind,
- Fig. 12: eine Querschnitt durch eine Variante eines mit einer Abdeckung versehenen Schlosses analog zur Darstellung in **Figur 7**,
- Fig. 13: eine Explosionsdarstellung des in **Figur 12** dargestellten Schlosses und
- Fig. 14: eine Variante einer Verbindungseinheit zu der in den **Figuren 8a** bis **8c** dargestellten Verbindungseinheiten.

### Wege zur Ausführung der Erfindung

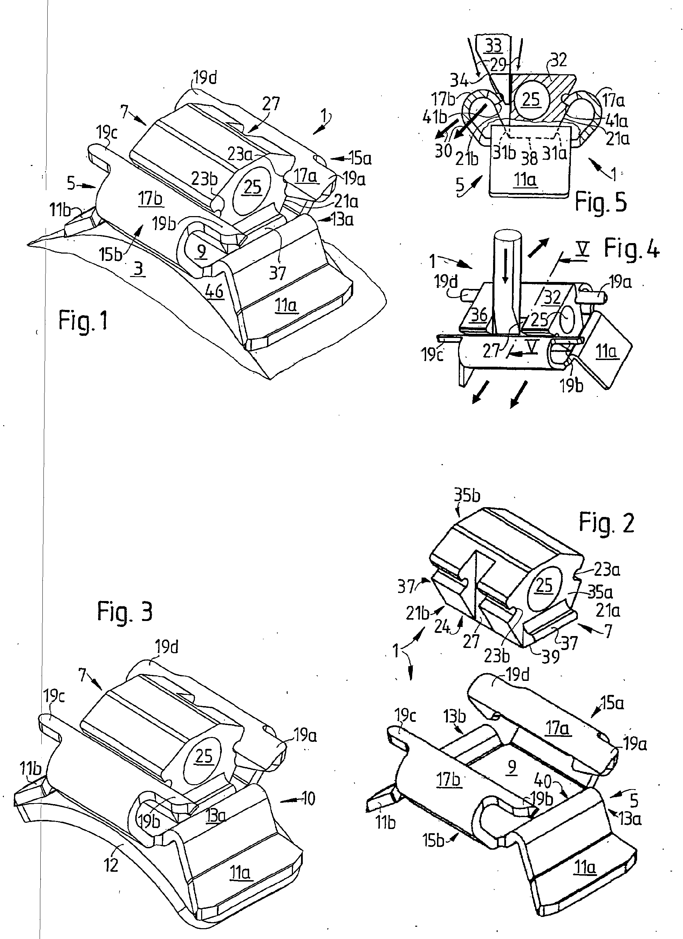

Ein erfindungsgemässes Schloss 1 aus einer in **Figur 11** dargestellten kieferorthopädischen Apparatur zur Zahnstellungskorrektur von Zähnen ist in **Figur 1** auf einer Zahnseitenwand **3** aufgeklebt dargestellt. In **Figur 2** ist dieses Schloss **1** im noch nicht eingeschnappten Zustand mit voneinander getrennter Basieinheit **5** und Verbindungseinheit **7** dargestellt. Die Verbindungseinheit ist in **Figur 2** gegenüber der Darstellung in **Figur 1** um 180° gedreht.

Die Basiseinheit **5** hat einen Basisboden **9,** der an seiner Vorder- und Hinterseite in einen vorderen und einen hinteren Auflageansatz **11a** und **11b** übergeht. Der Übergang erfolgt jeweils mit einem als Haltewulst für die Verbindungseinheit **7** wirkenden Wulst **13a** und **13b.** Seitlich hat die Basiseinheit **5** je eine nach oben stehende, elastische Längsfederwand **15a** und **15b.** Das obere freie Ende jeder Längsfederwand **15a** bzw. **15b** ist als Krallenleiste **17a** bzw. **17b** krallenartig nach innen und gegen den Basisboden **9** nach unten gebogen. Jede Krallenleiste **17a** und **17b** hat vorstehende Fortsätze **19a** bis **19d,** an denen Fixierungsmittel für einen in die Verbindungseinheit **7** eingelegten Bogendraht anbringbar sind.

Die Verbindungseinheit **7** ist klotzartig mit zwei einander gegenüberliegenden Längsseitenwänden **21a** und **21b** ausgebildet. Die Längsseitenwände **21a** und **21b** sind gegeneinander derart geneigt, dass sie nach unten konisch zusammenlaufen. In jeder Längsseitenwand **21** und **21b** ist oberhalb der Mitte eine Längsnut **32a** bzw. **23b** ausgebildet, welche parallel zum Boden **24** der Verbindungseinheit **7** verläuft. Ferner hat die Verbindungseinheit **7** einen Längsdurchbruch **25** zur Aufnahme eines Bogendrahts. In der Längsseitenwand **21 b** ist eine senkrecht zur Längsnut **23b** verlaufende Ausnehmung **27** ausgebildet, wobei die Ausnehmungstiefe tiefer als die Tiefe der Nut **23b** ist. Die Ausnehmung **27** dient dazu, wie in den **Figuren 4** und **5** dargestellt ist, die sehr gut fixiert in der Basiseinheit **5** sitzende Verbindungseinheit **7** aus dieser wieder zu entfernen, d.h. heraus zu hebeln. Die Verbindungseinheit **25** ist bis auf die Ausnehmung **27** symmetrisch zu einer auf dem Basisboden **9** bzw. dem Boden der Verbindungseinheit **7** senkrecht stehenden Ebene durch die Achse des Längsdurchbruchs **25** ausgebildet.

Zum Trennen einer in die Basiseinheit **5** eingesetzten Verbindungseinheit **32,** wird ein stabförmiges Element **33,** dessen Stabspitze in einen Keil **34** ausgeformt ist, in die Ausnehmung **27** in Richtung der Pfeile **29** in **Figur 5** eingeschoben. Anschliessend wird das stabförmige Element **33** in Richtung der Pfeile **30** bewegt, wodurch die Krallenleiste **17b** aus der Längsnut **23b** herausgezogen wird. Aufgrund der elastischen Federwirkung der Krallenleiste **17a** erfolgt eine leichte Kippung der Verbindungseinheit **7** um deren Bodenkante **31.** Das stabförmige Element **33** kann nun herausgezogen werden, wobei dann die Krallenleiste **17b** auf die Längsseitenwand **21 b** zurückfedert und somit aufgrund der Wandschiefe die Verbindungseinheit **7** aus der Basiseinheit **5** herausgeschoben wird. Das stabförmige Element **33** kann jedoch vor dessen Entfernen, nachdem die Krallenleiste **17b** aus der Längsnut **23b** herausgeschnappt ist, in eine zur Pfeilrichtung **30** entgegengesetzte Richtung bewegt werden, worauf dann die Verbindungseinheit **7** über die Oberseite der Krallenleiste **17b** herausgehebelt wird.

Die Verbindungseinheit **32** ist analog zur Verbindungseinheit **7** ausgebildet. Sie hat lediglich gegenüber dieser eine plane Oberfläche **36,** welche parallel zur Bodenfläche **38** der Verbindungseinheit **32** verläuft.

Die Verbindungseinheit **7** hat an jeder Stirnseite **35a** und **35b** ein Passteil, wobei in den **Figuren 1** und **2** lediglich das Passteil **37** sichtbar ist. Die Passteile **37** verhindern ein Verschieben der in die Basiseinheit **5** eingeschnappten Verbindungseinheit **7** in Richtung der Achse des Längsdurchbruches **25.** Im eingeschnappten Zustand liegt nämlich eine untere Schräge **39** auf einer hierzu passenden Schräge **40** des Haltewulstes **13a** bzw. 13b auf.

Um die Verbindungseinheit **7** in die Basiseinheit **5** einschnappend einzusetzen, wird die Verbindungseinheit mit ihrem Boden **39** auf die Oberseite der Krallenleisten **17a** und **17b** aufgelegt und dann gegen den Basisboden **9** gedrückt. Beim Eindrücken gleiten die Längsseitenwände **21a** und **21b** an den Krallenleisten **17a** und **17b** entlang und drücken diese nach aussen. Kommen die Krallenleisten **17a** und **17b** auf die Höhe der Längsnuten **23a** und **23b,** so springen die Krallenleisten **17a** und **17b** in die Längsnuten **23a** und **23b** ein. Das Einspringen wird dadurch erleichtert, dass die Längsnuten **23a** und **23b** eine von innen nach aussen und nach unten verlaufende Fläche **41a** bzw. **41b** haben. Da in der Regel nicht absolut genau in die Basiseinheit **5** eingeschoben werden kann, kommt kurz vor Erreichen der Einschiebeendposition eine der Passteile **37** mit der Schräge **40** eines der Haltewulste **13a** bzw. **13b** in Kontakt, wodurch die Verbindungseinheit **7** parallel zur Achse des Längsdurchbruchs **25** in die richtige Position geschoben wird. Beim vollständigen Eindrücken geht zudem von den Schrägen **40** eine elastische Federwirkung aus, wodurch die Verbindungseinheit **7** gegen die Krallenleisten **17a** und **17b** verspannt bzw. vorgespannt gehalten ist.

Die Verbindungseinheit **7** wird man bevorzugt in einer Minitechnik sintern, wobei hier Genauigkeiten bis auf 20 µm erreichbar sind. Die Basiseinheit **5** kann aus Federblech hergestellt werden. Es können auch sogenannte Memoriematerialien verwendet werden sowie auch Kunststoff. Es kann auch Kunststoffspritzguss verwendet werden, wobei die Teile nach dem Spritzen gebacken werden.

Die in den **Figuren 1, 2, 4, 5** und **8** dargestellte Basiseinheit **5** hat einen vorderen und einen hinteren Auflageansatz **11a** und **11b** zur Befestigung auf der Zahseitenfläche oder einem Zahnband. Ein für die Befestigung zu verwendendes Bindemittel **46** füllt dann den Bereich unterhalb des Basisbodens **9** aus **(Figur 1).** Eine Basiseinheit **5** kann nun als Basiseinheit **10** dahingehend abgewandelt werden, wie in **Figur 3** dargestellt ist, dass der vordere und der hintere Auflageansatz **11a** und **11b** auf ein der Zahnseitenkontur angepasstes Auflageelement **12** angeschweisst ist. Anstelle eines einzigen Auflageelements **12** können bei langen Schlössern, wie in **Figur 11** gezeigt, auch zwei und mehr Auflageelemente **12** angeordnet werden.

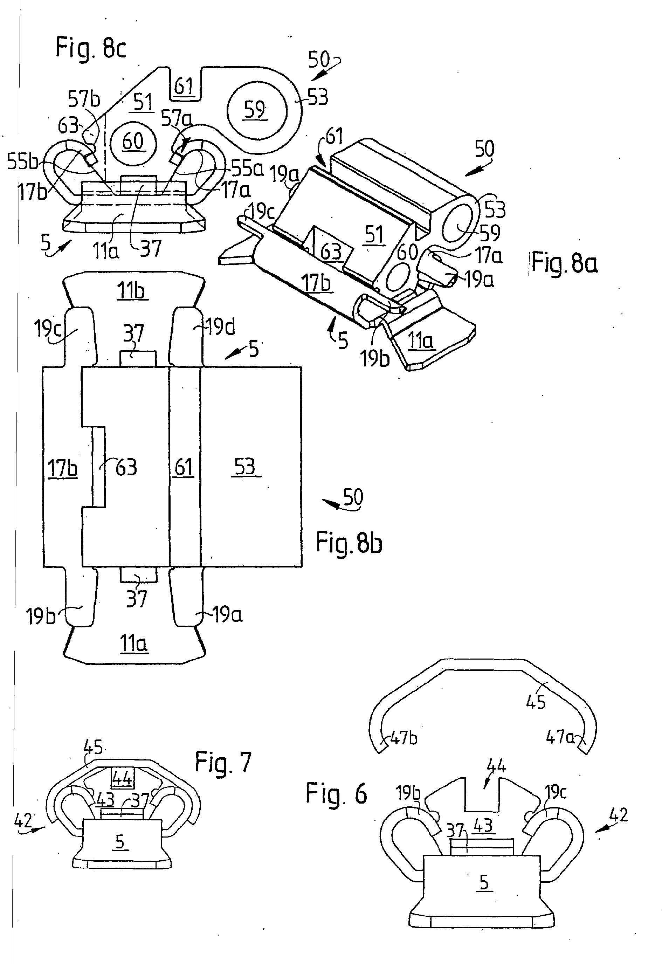

Anstelle der oben beschriebenen und in den **Figuren 1, 4** und **5** dargestellten Schlösser **1,** kann der oben erwähnte Längsdurchbruchs **25** auf der Oberseite einer Verbindungseinheit **43** eines Schlosses **42,** welches in den **Figuren 6** und **7** dargestellt ist, als eine nach oben offene Längsnut **44** ausgebildet sein. Wird die Längsnut **44** vorgesehen, sollte vorzugsweise die Nut **44** sowie die gesamte Verbindungseinheit **43** mit einem Abdeckelement **45** abgedeckt werden. Das Abdeckelement **45** ist in **Figur 6** in seiner noch abgehobenen Lage und in **Figur 7** in einer in die Basiseinheit **5** eingeschappten Lage, in der die Verbindungseinheit **7** abgedeckt ist, dargestellt. Das Abdeckelement **45** kann beidseits mit nach unten und nach innen gebogenen Krallenleisten **47a** und **47b** ausgestattet werden. Die Krallenleisten **47a** und **47b** können dann, wie in **Figur 7** dargestellt ist, über die Krallenleisten **17a** und **17b** der Basiseinheit **5** bei in die Basiseinheit **5** eingeschnappter Verbindungseinheit **43** ebenfalls einschappend gedrückt werden. Ein in der Längsnut **44** eingelegter (nicht dargestellter) Bogendraht kann dann mit einer um die Fortsätze **19a** bis **19d** greifenden Ligatur fixiert werden.

Das in den **Figuren 8a** bis **8c** dargestellte Schloss **50** ist analog zu dem in den **Figuren 6** und **7** dargestellten Schloss **42** ausgebildet. Eine Verbindungseinheit **51** dieses Schlosses **50** hat jedoch einen Längsseitenansatz **53.** Die Verbindungseinheit **51** hat, wie auch die Verbindungseinheit **43,** analog zu den Längsseiten **21a** und **21b** ausgebildete Längsseiten **55a** und **55b,** welche auch hier analog zu den Längsnuten **23a** und **23b** Längsnuten **57a** und **57b** aufweisen. Der Längsseitenansatz **53** ist ausserhalb der Längsseite **55a** der Verbindungseinheit **51** angeordnet. Er ist seitlich und oberhalb der Längsnut **57a** angeordnet. Der Längsseitenansatz **53** hat einen Längsdurchbruch **59** für einen Bogendraht. Die Verbindungseinheit **50** hat neben diesem Längsdurchbruch **59** einen zum Längsdurchbruch **25** analog ausgebildeten Längsdurchbruch **60** sowie eine zur Längsnut **44** analog ausgebildete Längsnut **61.** Auch hat die Verbindungseinheit **50** eine zur Ausnehmung **27** analog ausgebildete Ausnehmung **63.** Die Verbindungseinheit **50** hat somit drei Möglichkeiten, Bogendrähte auszunehmen, nämlich die beiden Längsdurchbrüche **59** und **60** sowie die Längsnut **61.** Die Verbindungseinheit **51** des Schlosses **50** ist in die Basiseinheit **5** einschnappbar. Analog zum Abdeckelement **45** beim Schloss **42** kann auch hier ein analoges, nicht dargestelltes Abdeckelement verwendet werden, welches dann um die Krallenleiste **17** der Basiseinheit **5** und um die Wölbung des Längsseitenansatzes **53** einschnappend ausgebildet ist.

Die in den **Figuren 8a** bis **8c** gezeigte Lage des Längsseitenansatzes **53** ist nicht zwingend; er kann beispielsweise in der Höhe gegenüber der Längsnut **57a** verschoben angeordnet sein. Auch kann der Längsseitenansatz **53** nicht, wie in **Figur 8a** dargestellt, rechts, sondern links angeordnet sein.

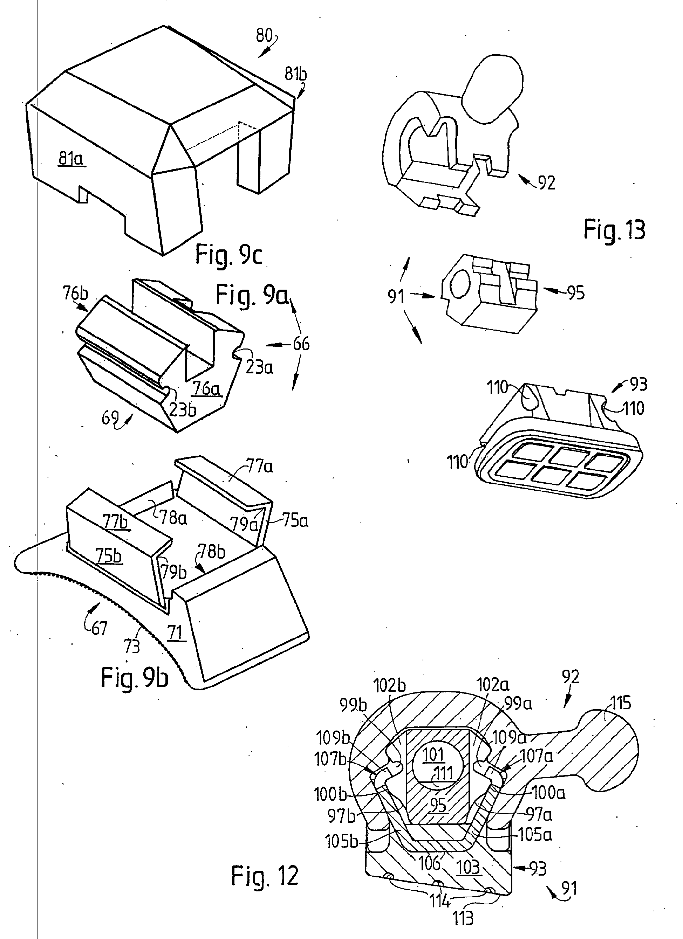

In **Figur 9** ist ein Schloss **66** mit einer Basiseinheit **67** und einer Verbindungseinheit **69** dargestellt. Die Verbindungseinheit **69** ist bis auf das fehlende Passteil **37** analog zur Verbindungseinheit **43** ausgebildet. Die Basiseinheit **67** ist im Gegensatz zur Basiseinheit **5** analog zu den oben beschriebenen Verbindungseinheiten **7, 43** und **51** vorzugsweise in MIM-Technik (Metal Injection Moulding) gesintert. Die Basiseinheit **67** hat ein Fussteil **71,** welches mit seiner Auflagefläche **73** direkt auf der Zahnseite oder auf einem, auf dem betreffenden Zahn **3** angeordneten Zahnband aufklebbar ist. Die Auflagefläche **73** ist vorzugsweise für das nachfolgend beschriebene Kleben sandgestrahlt. Das Aufkleben dieser Basiseinheit **67** wie auch das Aufkleben der in **Figur 3** dargestellten Basiseinheit **10** kann, wie in der WO 2002/058584, insbesondere auf Seite 45, Zeile 20 bis Seite 49, Zeile 5 beschrieben ist und in der dortigen Figur 26 gezeigt ist, vorgenommen werden. Die Basiseinheit **67** hat an den Längsseiten je eine Längsfederwand **75a** und **75b.** Das freie Ende jeder Längsfederwand **75a** und **75b** trägt eine Krallenleiste **77a** bzw. **77b,** welche im Gegensatz zu den Krallenleisten **17a** und **17b** nicht stetig aus der Längsfederwand **75a** bzw. **75b** hervorgeht, sondern mit einem Knick **79a** bzw. **79b** umgelenkt wird. Der Winkel zwischen Krallenleiste **77a** bzw. **77a** und der betreffenden Längsfederwand **75a** bzw. **75b** ist in **Figur 9** stumpf ausgebildet. Eine bessere Halterung wird jedoch erreicht, wenn dieser Winkel spitz gewählt wird. Im eingeschnappten Zustand greifen die Krallenleisten **77a** und **77b** in die Längsnuten **23a** bzw. **23b** ein. Ein zum Passteil **37** analoger Passteil ist an den Stirnseiten **76a** und **76b** der Verbindungseinheit **69** nicht vorgesehen, da diese in der Basiseinheit **67** durch seitliche Anschläge **78a** und **78b** gegen Verschieben sicherbar ist.

Auch das aus den in **Figuren 9a** und **9b** dargestellten Verbindungseinheit **69** und Basiseinheit **67** bestehende Schloss kann mit einem in **Figur 9c** dargestellten Abdeckelement **80** überdeckt werden. Das Abdeckelement **80** hat, um eine Klemmwirkung zu erzielen, nach innen stehende Seitenwände **81a** und **81b.** Am unteren Rand der Seitenwände **81a** und **81b** ist eine Ausnehmung **82** angeordnet. In diese Ausnehmung **82** kann mit einem an seinem vorderen Ende schraubenzieherartig ausgebildeten Stab eingegriffen werden, um das aufgeschnappte Abdeckelement **82** wieder ausschnappen zu lassen (herauszuhebeln). Der Stab kann analog zum Element **33** in **Figur 4** bzw. **5** ausgebildet sein.

Ob nun eine Ausführung einer Basiseinheit analog der Basiseinheit **5** oder analog der Basiseinheit **67** ausgebildet wird, hängt von Herstellungsverfahren und den Einsatzgegebenheiten in der Zahnheilkunde ab.

Die in den **Figuren 1** bis **8** dargestellten Verbindungseinheiten **7** werden, wie oben bereits angetönt, mit einer Minitechnik gesintert. Anhand von **Figur 10** wird die Herstellung der Verbindungseinheit **51** mit dem Längsseitenansatz **53** skizziert. Die in **Figur 10** gezeigte Verbindungseinheit **51** stellt ein Grundmuster für weitere Verbindungseinheiten dar, bei denen unterschiedliche Querschnitte der Längsdurchbrüche **59** und **60** sowie der Längsnut **61** gefordert werden. In vorteilhafter Weise lassen sich hierdurch die Querschnitte der Längsdurchbrüche **59** und **60** sowie der Längsnut **61** an zu verwendende Querschnitte von Bogendrähten anpassen. Um diese unterschiedlichen Querschnitte herzustellen, werden beim Sinterverfahren diverse Kerne **83a** bis **83d** in den Längsdurchbruch **59** bzw. diverse Kerne **85a** bis **85c** in den Längsdurchbruch **60** oder diverse Kerne **87a** oder **87b** in die Längsnut **61** eingelegt. Wird keiner der Kerne eingelegt, so wird ein Längsdurchbruch **59** bzw. **60** bzw. eine Längsnut **61** mit der dick ausgezogenen Innenkontur erhalten. Die Aussenkontur der Kerne **83a** bis **83d** und **85a** bis **85c** für die Längsdruchbrüche **59** und **60** ist immer ein Kreiszylinder.

In **Figur 11** sind zu einer beispielsweisen Veranschaulichung einer kieferorthopädischen Apparatur **90** mehrere Schlösser mit bereits eingeschnappten bzw. noch einzuschnappenden Verbindungseinheiten dargestellt. Die zur Apparatur gehörenden Bogendrähte sind nicht eingezeichnet, um die Figur nicht zu überladen. Eine kieferorthopädische Apparatur muss mindestens zwei Schlösser aufweisen, um mit an beiden Schlössern angreifendem Bogendraht eine Zahnstellungskorrektur vornehmen zu können. Anstelle eines Schlosses kann auch ein sogenannter Aufbiss eingesetzt werden, der dann die Funktion eines Schlosses übernimmt. Die Schlösser sind hier alle lateral, lingual bzw. palatinal an den zu korrigierenden Zähnen angeordnet. Eine linguale bzw. palatinale Anordnung wird gegenüber einer buccalen bevorzugt, falls die Apparatur nicht sichtbar sein sollte. Selbstverständlich kann auch eine buccale Anordnung gewählt werden. In **Figur 11** sind der Anschaulichkeit wegen Schlösser mit unterschiedlichen Basiseinheiten und Verbindungseinheiten verwendet, wobei auch die Grösse, insbesondere die Länge der Schlösser aufgrund differierender aufzubringender Korrekturkräfte unterschiedlich ausgewählt sind.

Analog zu dem in **Figur 1** dargestellten Schloss **42** zeigt **Figur 12** ebenfalls ein Schloss **91** mit einem Abdeckelement **92.** Der in **Figur 12** dargestellte Querschnitt verläuft in einer Ebene, welche parallel zu der in **Figur 7** gezeigten Ansichtsebene durch die Mitte des Schlosses **91** verläuft. Das Schloss **91** hat neben dem Abdeckelement **92** eine Basiseinheit **93** und eine Verbindungseinheit **95.**

Die Verbindungseinheit **95** ist in groben Zügen analog zur Verbindungseinheit **7 (Figur 2)** ausgebildet. Bei der Verbindungseinheit **7** verlaufen die Längsseitenwände **21a** und **21b** als ebene Flächen schräg nach aussen unter einem Winkel zur Bodenfläche **38 (Figur 5).** Bei der Verbindungseinheit **95** hingegen sind die Längsseitenwände **97a** und **97b** unterhalb der jeweiligen Längsnut **99a** bzw. **99b** nach innen gewölbt. Zwischen dem Längsnuteneinstich und der jeweiligen nach innen gewölbten Längsseitenwände **97a** und **97b** befindet sich ein analog zu den Längsseitenwänden **21a** und **21b** ebenes schräg verlaufendes Längsseitenwandstück **100a** bzw. **100b.** Analog zum Längsdurchbruch **25** der Verbindungseinheit **7** hat auch die Verbindungseinheit **95** einen Längsdurchbruch **101.**

In Gegensatz zur der lediglich einen Ausnehmung **27** der Verbindungseinheit **7** hat die Verbindungseinheit **91** beidseits eine Ausnehmung **102a** bzw. **102b** und ist somit im Gegensatz zum Verbindungselement **7** symmetrisch zu einer durch die Längsachse gehende Ebene ausgebildet.

Die Basiseinheit **93** ist analog zur Basiseinheit **67** mit einem gesinterten Fussteil **103** ausgebildetet, dessen Sintermasse die mit geöffneten U-Schenkeln ausgebildeten Federwände **105a** und **105b** in ihrem "U-Boden" **106** fixiert. Die freien Enden der Federwände **105a** und **105b** sind als Krallen **107a** bzw. **107b** nach innen für einen einschnappenden Eingriff in die Längsnuten **99a** und **99b** gebogen. Die Krallen **107a** und **107b** haben in ihrer Mitte je eine Ausnehmung **109a** bzw. **109b.** Bei eingelegter Verbindungseinheit **95** und abgenommenem Abdeckelement **92** kann ein stabförmiges Element analog zum stabförmigen Element **33 (Figur 5)** durch jeweils eine Ausnehmung **107a** bzw. **107b** in eine Ausnehmung **102a** bzw. **102b** gesteckt werden. Mit dem eingesteckten Element können dann die Krallen **107a** bzw. **107b** aus den Längsnuten **99a** bzw. **99b** herausgehebelt werden, wobei die nach innen gewölbten Längsseitenwand **97a** bzw. **97b** ein Ausweichen der federnden Längsseitenwand **21a** bzw. **21b** gestatten.

Damit die Verbindungseinheit **95** einfach in die Basiseinheit **93** einklinkbar ist, hat die Basiseinheit **93** analog zu den Haltewulsten **13a** und **13b** der Verbindungseinheit **7** Stirnwände. Eine der Stirnwände **111** ist in **Figur 12** durch den Längsdurchbruch **101** sichtbar.

Die Basiseinheit **93** kann nun, wie in **Figur 12** gezeigt, mit dem Fussteil **103** einstückig ausgebildet sein. Der Fussteil **103** kann aber auch als separates Teil ausgebildet werden, welches dann mit dem Grundelement zur Basiseinheit **93** vereinigt wird. Die Vereinigung kann durch Kleben, Einschnappen oder Verschweissen erfolgen. Ein separater Fussteil **103** hat den Vorteil, dass Fussteile mit unterschiedlicher Zahnauflagefläche **113** hergestellt werden können. Die Anpassung betrifft die jeweilige Form der entsprechenden Zahnoberfläche. Wird die Basiseinheit **93** einstückig hergestellt, so wird die Auflagefläche bereits bei Herstellung der Basiseinheit entsprechend geformt und dann von Zahnarzt, sofern notwendig, fein angepasst.

Um einen guten Halt der Basiseinheit **93** auf der Zahnoberfläche oder einem Zahnband zu erreichen, sind auf der Zahnauflagefläche **113** Rillen **114** vorhanden, welche ein Klebemittel aufnehmen können.

Das Abdeckelement **92** ist im Wesentlichen eine Haube mit eleastisch aufbiegbaren Seitenteilen, wobei die Haube über die in die Basiseinheit **93** eingelegte Verbindungseinheit **95** stülpbar ist. Beim Überstülpen werden zudem die Federwände **105a** und **105b** gegen die Längsseitenwand der Verbindungseinheit **95** und die Krallen **107a** und **107b** in die Längsnuten **99a** und **99b** gedrückt. Das Abdeckelement **92** hat einen seitlichen Ansatz **115.** Dieser Ansatz **115** ist pilzförmig ausgebildet. Der Ansatz **115** dient einerseits zum Ergreifen des Abdeckelements **92** und Abziehen von Verbindungs- und Basiseinheit **95** und **93;** andererseits kann an ihm auch eine Ligatur befestigt werden. Es ist in Betracht zu ziehen, dass, wie bereits eingangs erwähnt, Verbindungs- und Basiseinheit sowie Abdeckelement Grössenordnungen im Millimeterbereich haben.

Zum besseren Verständnis der Ausbildung des Schlosses **91** sind in **Figur 13** die drei Bausteine Abdeckelement **92,** Basiseinheit **93** und Verbindungseinheit **95** in einer perspektivischen Explosionszeichnung dargestellt. Die Basiseinheit **93** weist hier vier Kantenausnehmungen **110** auf, von denen drei in Figur 13 sichtbar sind. Diese Kantenausnehmungen **110** können zur Aufnahme einer Ligatur verwendet werden.

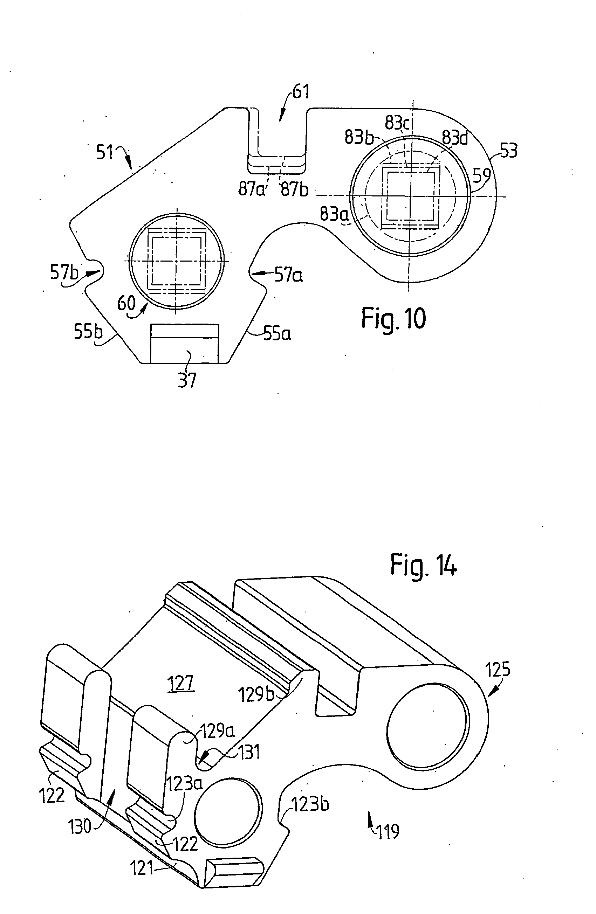

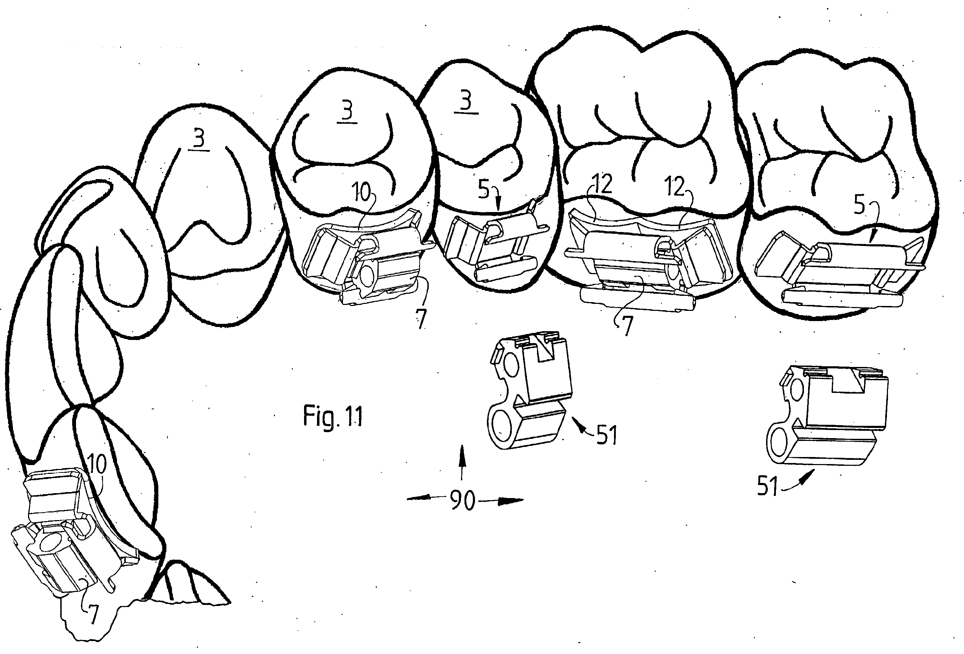

In **Figur 14** ist eine Variante einer Verbindungseinheit **119** zu einer in den **Figuren 8a** bis **8c** dargestellten Verbindungseinheit **51** dargestellt. In Gegensatz zur Verbindungseinheit **51** hat die Verbindungseinheit **119** analog zur Verbindungseinheit **95** einen nach innen gewölbten Längsseitenwandteil **121,** der durch ein schräg, ohne Wölbung, verlaufendes weiteres Längsseitenwandteilstück **122** von einem Längsnuteneinstich **123a,** in den Krallen der Basiseinheit eingreifen, getrennt ist. Im Gegensatz zur Verbindungseinheit **95** ist hier nur auf einer Längsseite ein gewölbter Längsseitenwandteil **121** vorhanden. Bei der Verbindungseinheit **119** ist ein einziger gewölbter Längsseitenwandteil **121** ausreichend, da ein unterhalb des zweiten Längsnuteneinstichs **123b** angeordneter gewölbter Längsseitenwandteil nicht bedient werden könnte, da er durch einen analog zum Längsseitenansatz **53** ausgebildeten Längsseitenansatz **125** abgedeckt ist. Im Gegensatz zur Verbindungseinheit **51** ist eine oberflächige Vertiefung **127** vorhanden, welche durch zwei längsseitige Erhebungen **129a** und **129b** begrenzt wird. In der Vertiefung können ein oder mehrere Bogendrähte geführt werden. Die Erhebung **129a** ist zweigeteilt. Zwischen beiden Erhebungen **129a** liegt eine analog zu den Ausnehmungen **27** sowie **120a** und **120b** ausgebildete Ausnehmung **130,** in die ein stabförmiges Element **33** zum Heraushebeln der Verbindungseinheit **119** aus einer Basiseinheit einbringbar ist. Die Vertiefung **127** geht auf der Rückseite der Erhebungen **129a** in eine Rille **131** über. In diese Rille **131** kann ein nicht dargestellter Eindruckspatel angesetzt werden, um die Verbindungseinheit **119** gegen die Federwirkung der Längsfederwände (z.B. 15a, 15b; 105a, 105b) in eine Basiseinheit einzudrücken.

## Patentansprüche

1. Kieferorthopädische Apparatur **(90)** zur Zahnstellungskorrektur von Zähnen mit wenigstens einem Bogendraht als Führungselement und mit wenigstens zwei Schlössern [Brackets] **(1; 42; 50; 66; 91)**, wobei jedes Schloss **(1; 42; 50; 66; 91)** eine Verbindungseinheit **(7, 32, 43, 51, 69; 95; 119)** für einen Verbund mit dem wenigstens einen Bogendraht und lediglich eine einstückige Basiseinheit **(5, 10, 67; 93)** mit einem Basisboden **(9; 113)** hat, die Verbindungseinheit **(7, 32, 43, 51, 69; 95; 119)** einschnappend in die Basiseinheit **(5, 10, 67; 93)** ausgebildet ist und der Basisboden **(9; 113)** auf einer Zahnseitenfläche wenigstens einem der Zähne bzw. auf wenigstens einem auf einem der Zähne angeordneten Zahnband fixierbar ist, **dadurch gekennzeichnet, dass** jede Verbindungseinheit **(7, 32, 43, 51, 69; 95; 119)** klotzartig mit zwei einander gegenüberliegenden Längsseitenwänden (21a, 21b) ausgebildet ist, in jeder Längsseite **(21a, 21b; 97a, 97b, 100a, 100b)** eine Längsnut **(23a, 23b; 57a, 57b; 99a, 99b; 123a, 123b)** vorhanden ist und jede Basiseinheit **(5, 10, 67; 93)** zwei einander gegenüberliegende elastisch aufbiegbare Längsfederwände **(15a, 15b; 75a, 75b; 105a, 105b)** hat, deren oberes freies Wandende **(17a, 17b; 77a, 77b; 107a, 107b)** krallenartig nach innen für einen einschnappenden Eingriff in die Längsnuten **(23a, 23b; 57a, 57b; 99a, 99b; 123a, 123b)** der Verbindungseinheit **(7, 32, 43, 51, 69; 95; 119)** gebogen ist.

2. Schloss [Bracket] **(1; 42; 50; 66; 91)** für eine kieferorthopädische Apparatur **(90)** nach Anspruch 1 zur Zahnstellungskorrektur von Zähnen unter Verwendung wenigstens eines Bogendrahts als Führungselement, wobei das Schloss **(1; 42; 50; 66; 91)** eine Verbindungseinheit **(7, 32, 43, 51, 69; 95; 119)** für einen Verbund mit dem wenigstens einen Bogendraht und lediglich eine einstückige Basiseinheit **(5, 10, 67; 93)** mit einem Basisboden **(9; 113)** hat, die Verbindungseinheit **(7, 32, 43, 51, 69; 95; 119)** einschnappend in die Basiseinheit **(5, 10, 67; 93)** ausgebildet ist und der Basisboden **(9; 113)** auf einer Zahnseitenfläche wenigstens einem der Zähne bzw. auf wenigstens einem auf einem der Zähne angeordneten Zahnband fixierbar ist, **dadurch gekennzeichnet, dass** jede Verbindungseinheit **(7, 32, 43, 51, 69; 95; 119)** klotzartig mit zwei einander gegenüberliegenden Längsseitenwänden **(21a, 21b; 97a, 97b; 100a, 100b)** ausgebildet ist, in jeder Längsseite **(21a, 21b; 97a, 97b; 100a, 100b)** eine Längsnut **(23a, 23b; 57a, 57b; 99a, 99b; 123a, 123b)** vorhanden ist und jede Basiseinheit **(5, 10, 67; 93)** zwei einander gegenüberliegende, elastisch aufbiegbare Längsfederwände **(15a, 15b; 75a, 75b; 105a, 105b)** hat, wobei jede Längsfederwand **(15a, 15b; 75a, 75b; 105a, 105b)** ein freies oberes Wandende **(17a, 17b; 77a, 77b; 107a, 107b)** hat, welches krallenartig nach innen für einen einschnappenden Eingriff in die Längsnuten **(23a, 23b; 57a, 57b; 99a, 99b; 123a, 123b)** der Verbindungseinheit **(7, 32, 43, 51, 69; 95; 119)** gebogen ist.

3. Schloss **(1; 42; 50; 66; 91)** nach Anspruch 2, **dadurch gekennzeichnet, dass** die Längsseitenwände **(21a, 21b**; **97a, 97b; 100a, 100b)** der Verbindungseinheit **(7, 32, 43, 51, 69; 95; 119)** gegeneinander geneigt sind, indem sie nach unten konisch nach innen verlaufen, damit beim einschnappenden Einpressen der Verbindungseinheit **(7, 32, 43, 51, 69; 95; 119)** in eine Basiseinheit **(5, 10, 67; 93)** die krallenartig gebogenen Längsfederwandenden **(17a, 17b; 77a, 77b; 107a, 107b)** entlang der Längsseitenwände **(21a, 21b**; **97a, 97b; 100a, 100b)** der Verbindungseinheit **(7, 32, 43, 51, 69; 95; 119)** bis zum Einschnappen in die Längsnuten **(23a, 23b; 57a, 57b; 99a, 99b; 123a, 123b)** gleiten können.

4. Schloss **(1; 91)** nach Anspruch 2 oder 3, **dadurch gekennzeichnet, dass** die Verbindungseinheit **(7; 32; 51; 95; 119)** wenigstens einen Längsdurchbruch **(25; 59; 101)** zur Aufnahme des Bogendrahts hat.

5. Schloss **(1)** nach einem der Ansprüche 2 bis 4, **dadurch gekennzeichnet, dass** die Verbindungseinheit **(51; 119)** einen Längsseitenansatz **(53; 125)** hat, der vorzugsweise ausserhalb der Längsseiten **(21a, 21b; 121, 122)** der Verbindungseinheit **(51; 119)** angeordnet ist, wobei der Längsseitenansatz **(53; 125)** insbesondere seitlich und in bevorzugter Weise oberhalb einer der Längsnuten **(23a, 23b; 123a, 123b)** angeordnet ist und der Längsseitenansatz **(53; 125)** in bevorzugter Weise einen Längsdurchbruch (59) für einen Bogendraht hat.

6. Schloss **(1; 42; 50; 66; 91)** nach einem der Ansprüche 2 bis 5, **dadurch gekennzeichnet, dass** die Verbindungseinheit **(7; 32; 51; 69; 95; 119)** wenigstens eine quer zu einer der Längsnuten **(23a, 23b; 99a, 99b; 123a, 123b)** durch diese hindurch verlaufende Ausnehmung **(27; 102a, 102b)** hat, wobei die Ausnehmungstiefe im Bereich der Nutentiefe liegt, um mit einem der Ausnehmungsbreite und -tiefe angepassten, vorzugsweise angespitzten, stabähnlichen Gebilde **(33)** die in die Basiseinheit **(5; 10; 67; 93)** eingeschnappte Verbindungseinheit **(7; 32; 51; 69; 95)** aus dieser heraushebeln zu können.

7. Schloss **(1; 42; 50; 66; 91)** nach einem der Ansprüche 2 bis 6, **dadurch gekennzeichnet, dass** die Basiseinheit **(5; 93)** quer zu den Längsfederwänden **(15a, 15b; 75a, 75b; 107a, 107b)** einen vorderen und einen hinteren Haltewulst **(13a, 13b; 78a, 78b; 111)** hat, welcher die eingeschnappte Verbindungseinheit **(7; 32; 51; 69; 95)** gegen Verschieben entlang der Längsnut **(23a, 23b; 99a, 99b)** sichert, wobei der Abstand der Haltewulste **(13a, 13b; 78a, 78b; 111)** bis auf eine Spieltoleranz der Länge der Verbindungseinheit **(7; 32; 51; 69; 95)** entspricht.

8. Schloss **(1; 42; 50; 66; 91)** nach einem der Ansprüche 2 bis 7, **dadurch gekennzeichnet, dass** der Basisboden **(9)** der Basiseinheit **(5, 10)** einen vorderen und einen hinteren Auflageansatz **(11a, 11b)** zur Auflage auf einer Zahnseitenfläche bzw. auf einem am Zahn angeordneten Zahnband hat und vorzugsweise der Übergang vom Basisboden **(9)** zum jeweiligen Auflageansatz **(11a, 11b)** mit einem erhabenen Haltewulst **(13a, 13b)** erfolgt, wobei der Abstand der Haltewulste bis auf eine Spieltoleranz der Länge der Verbindungseinheit **(7; 32; 51; 69)** entspricht.

9. Schloss **(1; 50)** nach einem der Ansprüche 2 bis 8, **dadurch gekennzeichnet, dass** an den krallenartigen Wandenden **(17a, 17b)** der Basiseinheit **(5, 10)** vorstehende Fortsätze **(19a - d)** angeordnet sind, an denen ein Fixierungsmittel zur Fixierung eines eingelegten Bogendrahts anbringbar ist.

10. Schloss **(1; 42; 66; 91)** nach einem der Ansprüche 2 bis 9, **gekennzeichnet durch** ein Abdeckelement **(45; 80; 92),** mit dem die in die Basiseinheit **(5, 67; 93)** eingeschnappte Verbindungseinheit **(7; 69; 95)** bei eingelegtem Bogendraht abdeckbar ist, wobei vorzugsweise jeder Längsrandbereich des Abdeckelements **(45; 80; 92)** krallenartig zum einschnappenden Übergreifen der krallenartigen Wandenden **(17a, 17b; 107a, 107b)** der Basiseinheit **(5)** nach innen gebogen ist.

11. Schloss **(1; 42; 50)** nach einem der Ansprüche 2 bis 10, **dadurch gekennzeichnet, dass** jedes obere freie Wandende **(17a, 17b; 77a, 77b)** jeder Basiseinheit **(5, 10, 67)** krallenartig nach innen und gegen den Basisboden **(9)** nach unten gebogen ausgebildet ist.
